# EUROPEAN PATENT SPECIFICATION

(11) **EP 3 057 812 B1**
(45) Date of publication and mention of the grant of the patent: **05.12.2018**
(21) Application number: 14877667.7
(22) Date of filing: 14.10.2014
(51) Int. Cl.: B60F 5/02, B64C 39/00

(54) **ENCLOSED DRONE APPARATUS AND METHOD FOR USE THEREOF**
GESCHLOSSENE DROHNENVORRICHTUNG UND VERFAHREN ZUR VERWENDUNG DAVON
APPAREIL DE TYPE DRONE FERMÉ ET SON PROCÉDÉ D'UTILISATION

(30) Priority: 15.10.2013 US 201361890992 P; 30.04.2014 US 201414265386; 05.10.2014 US 201462060000 P
(43) Date of publication of application: 24.08.2016
(73) Proprietor: Skypersonic LLC, Bloomfield Hills, MI 48304 (US)
(72) Inventor: SANTANGELO, Giuseppe, Troy, MI 48084 (US)
(74) Representative: AWA Sweden AB
(86) International application number: PCT/US2014/060552
(87) International publication number: WO 2015/105554

(56) References cited:
- WO-A1-2012/130856
- WO-A1-2013/105926
- US-A- 4 505 346
- US-A1- 2008 048 065
- US-A1- 2009 101 760
- US-A1- 2009 101 760
- US-A1- 2010 224 723
- US-A1- 2012 018 579
- US-A1- 2012 181 388
- US-A1- 2012 181 388
- US-B2- 7 073 748
- US-B2- 7 073 748
- US-B2- 8 342 440
- KALANTARI ARASH ET AL: "Design and experimental validation of HyTAQ, a Hybrid Terrestrial and Aerial Quadrotor", 2013 IEEE INTERNATIONAL CONFERENCE ON ROBOTICS AND AUTOMATION (ICRA); 6-10 MAY 2013; KARLSRUHE, GERMANY, IEEE, US, 6 May 2013 (2013-05-06), pages 4445-4450, XP032506553, ISSN: 1050-4729, DOI: 10.1109/ICRA.2013.6631208 ISBN: 978-1-4673-5641-1 [retrieved on 2013-10-13]
- Anonymous: "Quanser Engineering Blog - Your Comments Welcomed!: New Quanser Quadrotor UAV", , 26 August 2009 (2009-08-26), XP055352118, Retrieved from the Internet: URL:http://quanser.blogspot.de/2009/08/new -quanser-quadrotor-uav.html [retrieved on 2017-03-07]
- MOHAMMAD HADI AMOOZGAR ET AL: "Fault-Tolerant Fuzzy Gain-Scheduled PID for a Quadrorotor Helicopter Tested in the Presence of Actuator Faults", CONCORDIA UNIVERSITY, MONTREAL, QUEBEC, CANADA, 30 March 2012 (2012-03-30), XP055352808, IFAC Conference - Brescia Italy
- KALANTARI ET AL.: 'Design and Experimental Validation of HyTAQ, a Hybrid Terrestrial and Aerial Quadrotor' IEEE INTEMATIONAL CONFERENCE ON ROBOTICS AND AUTOMATION 06 May 2013, pages 4445, 4446, - 4447, 4449, XP032506553

## Description

### BACKGROUND OF THE INVENTION

The invention relates generally to unmanned vehicles capable of flight. Such vehicles are commonly referred to as unmanned aerial vehicles ("UAVs"), or less formally as "drones". The invention is an enclosed drone apparatus, and a method for using such a device.

Drones were originally developed for use by the military in the context of special operations. The technology has spread to civilian applications such as policing, firefighting, and security. Many are predicting that the developed world is on the cusp of a dramatic revolution in the use of drones for non-governmental use. Quartz (www.qz.com) published an article in January 2013 titled "[t]he private drone industry is like Apple in 1984."

There are good reasons to conclude that drone technology may soon impact the daily lives of everyday consumers. Amazon CEO Jeff Bezos dominated the headlines during the busy Christmas shopping season of 2013 when he announced that Amazon was testing drone technology as a potential delivery system for some Amazon products. In February 2014, the www.aviationpros.com website in February 2014 publicized two reports predicting a global drone market of $8.35 billion by 2018 and $114.7 billion by 2023.

In response to the anticipated wide-spread adoption of drone technology, the Federal Aviation Administration ("FAA") issued a "road map" on November 7, 2013 that identified technical, regulatory, and procedural issues that would need to be overcome for the widespread integration of drones into commercial airspace. Numerous state legislatures have enacted or are considering the enactment of laws addressing privacy and safety concerns pertaining to the proper use of drones. The National Conference of State Legislatures

In anticipation of a burgeoning governmental and private markets for drones, there are significant ongoing efforts to improve drone technology in certain respects. Unfortunately, these efforts ignore a fundamental way of protecting bystanders and the drone itself. The prior art does teach or suggest positioning the drone within an enclosure that can protect the outside world from the drone, and the drone from the outside world.

KALANTARI ARASH ET AL: "Design and experimental validation of HyTAQ, a Hybrid Terrestrial and Aerial Quadrotor", 2013 IEEE INTERNATIONAL CONFERENCE ON ROBOTICS AND AUTOMATION (ICRA), 6-10 MAY 2013, KARLSRUHE, GERMANY, IEEE, US, 6 MAY 2013, pages 4445-4450, XP032506553 details the design modeling, and experimental validation of a novel mobile robot capable of both aerial and terrestrial locomotion.

### SUMMARY OF THE INVENTION

The invention relates generally to unmanned vehicles capable of flight. Such vehicles are commonly referred to as unmanned aerial vehicles ("UAVs"), or less formally as "drones". The invention is an enclosed drone apparatus, and a method for using such a device.

The apparatus includes a vehicle assembly that is located within an enclosure component. A wide range of different vehicle assemblies can be incorporated into the apparatus. Potentially any prior art vehicle assembly can benefit by being enclosed within an enclosure component.

The enclosure component can protect the vehicle assembly from being damaged by the environment of the apparatus. The enclosure component can also protect the persons and property in the environment of the apparatus from being damaged by the vehicle assembly.

The enclosure component also enable the apparatus to operate in a rolling mode in addition to a flight mode.

### BRIEF DESCRIPTION OF THE DRAWINGS

Different examples of various attributes and components that can be incorporated into the apparatus and methods for using the apparatus are illustrated in the drawings described briefly below. No patent application can expressly disclose in words or in drawings, all of the potential embodiments of an invention. In accordance with the provisions of the patent statutes, the principles, functions, and modes of operation of the apparatus are illustrated in certain preferred embodiments. However, it must be understood that the apparatus may be practiced otherwise than is specifically illustrated without departing from its spirit or scope.
Figure 1a is a block diagram illustrating an example of different types of components that can make up an apparatus.
Figure 1b is a hierarchy diagram illustrating an example of different types of operating modes.
Figure 1c is a block diagram illustrating an example of a user interacting with the apparatus.
Figure 1d is a hierarchy diagram illustrating an example of the different types of enclosure assemblies.
Figure 1e is a block diagram illustrating an example of the different types of components that can make up an enclosure assembly.
Figure 1f is a block diagram illustrating an example of the different types of components that can make up a vehicle assembly.
Figure 1g is a block diagram illustrating an example of the different types of components that can make up the frame.
Figure 1h is a block diagram illustrating an example of the different types of components that can serve as supplemental components for the apparatus.
Figure 2a is a perspective diagram illustrating an example of an apparatus.
Figure 2b is a top view diagram illustrating an example of an apparatus.
Figure 2c is a bottom view diagram illustrating an example of an apparatus.
Figure 2d is a side view diagram illustrating an example of an apparatus.
Figure 3a is side view diagram illustrating an example of an enclosure assembly.
Figure 3b is a side view diagram illustrating an example of an enclosure assembly.
Figure 3c is a perspective view diagram illustrating an example of an enclosure assembly that is not curved.
Figure 4a is a perspective view diagram illustrating an example of an air vehicle assembly.
Figure 4b is a top view diagram illustrating an example of a frame.
Figure 4c is a top view diagram illustrating an example of a frame.
Figure 4d is a top view diagram illustrating an example of a frame.
Figure 4e is a top view diagram illustrating an example of a frame.
Figure 4f is a top view diagram illustrating an example of a frame.
Figure 4g is a top view diagram illustrating an example of a frame.
Figure 4h is a top view diagram illustrating an example of a frame.
Figure 5a is a top view diagram illustrating an example of an apparatus.
Figure 5b is a side view diagram illustrating an example of an apparatus in a rolling operating mode.
Figure 5c is a side view diagram illustrating an example of how an apparatus can be steered while in a rolling mode.
Figure 6a is a flow chart diagram illustrating an example of a rolling operating mode.
Figure 6b is a flow chart diagram illustrating an example of an apparatus switching back and forth between various operating modes.

### DETAILED DESCRIPTION

The invention relates generally to unmanned vehicles capable of flight. Such vehicles are commonly referred to as unmanned aerial vehicles ("UAVs"), or less formally as "drones". The invention is an enclosed drone apparatus, and a method for using such a device.

### I. OVERVIEW

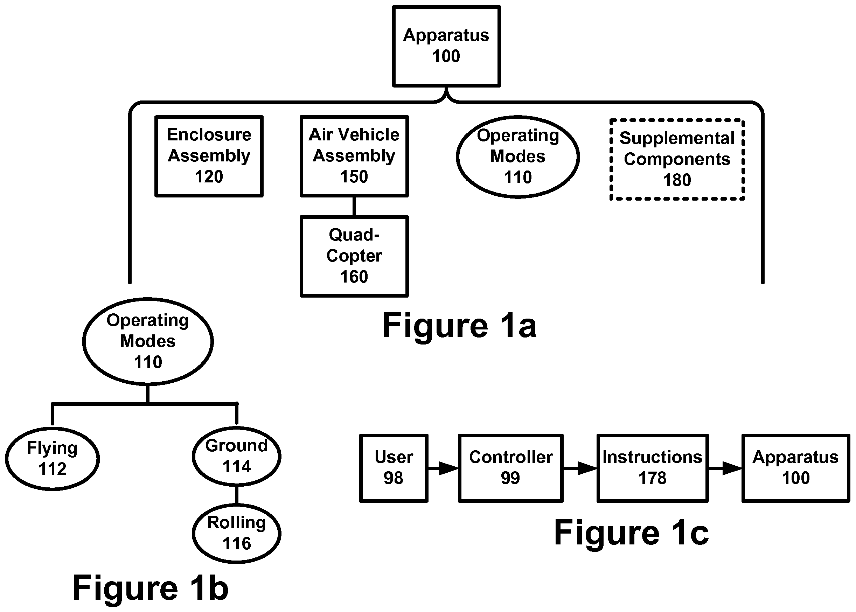

Figure 1a is a block diagram illustrating an example of different types of components that can make up an apparatus 100. The apparatus 100 can be comprised of air vehicle assembly 150 is enclosed within an enclosure assembly 120. Many different types of drones currently known in the prior art or developed in the future can be incorporated as an air vehicle assembly 150 for the apparatus 100. The apparatus 100 can use a wide variety of different enclosure assemblies 120.

### A. Protection/Safety Advantages from an Enclosed UAV

The apparatus 100 can be described as a drone or unmanned aerial vehicle ("UAV") that operates within a protective enclosure. The enclosure assembly 120 can protect the air vehicle assembly 150 from the operating environment of the apparatus 100 and the operating environment of the apparatus 100 from the air vehicle assembly 150.

There are many reasons to be enthusiastic about the possibilities presented by drone technology. However, there are also a variety of negative of implications to many drone designs. Any device capable of powered movement is going to present some risk of accidents that injure people, property, and the drone device itself. UAVs operate in accordance with instructions provided via remote control, instructions provided prior to use, and/or autonomous algorithms/heuristics. Some level of accident risk is inevitable. Thus it can also be helpful to reduce the negative consequences of accidents/collisions as well as reducing the risk of accidents/collisions.

Such risks are particularly prevalent in the context of air travel. UAVs typically involve one or more propellers rotating rapidly. Collisions between propellers and the world external to the UAV can damage the external environment as well as the drone. A damaged propeller can cause a UAV to crash to the ground, potentially causing property damage, personal injuries, and even death.

Users and bystanders alike can benefit when an air vehicle assembly 150 is protected in an enclosure assembly 120. The air vehicle assembly 150 can be completely, substantially, or even partially enclosed by the enclosure assembly 150. The enclosure assembly 120 can vary widely with respect to its elasticity. Different functions and operating environments can merit different air vehicle assembly 150 attributes and enclosure assembly 120 attributes.

Protecting the air vehicle assembly 150 during the landing process can be particularly beneficial. So can the ability of user to change the operating mode of the apparatus from air-based movement to ground-based movement.

### B. Multiple Operating Modes - New Operational Opportunities

By enclosing an air vehicle assembly 150 within an enclosure assembly 120, entirely new operating modes 110 can be created. Figure 1b is a hierarchy diagram illustrating an example of different types of operating modes 110. The apparatus 100 can potentially be implemented in such a manner as to possess two or more distinct operating modes 110. For example, the apparatus 100 can provide for flight (a flying operating mode 112), ground (a driving operating mode 114), and potentially operating modes 110 pertaining to water, whether on or below the surface of the water. Different embodiments may involve multiple propulsion means pertaining to a single type of operating mode 110. For example, an apparatus 100 could be configured to fly like a plane as well as like a helicopter.

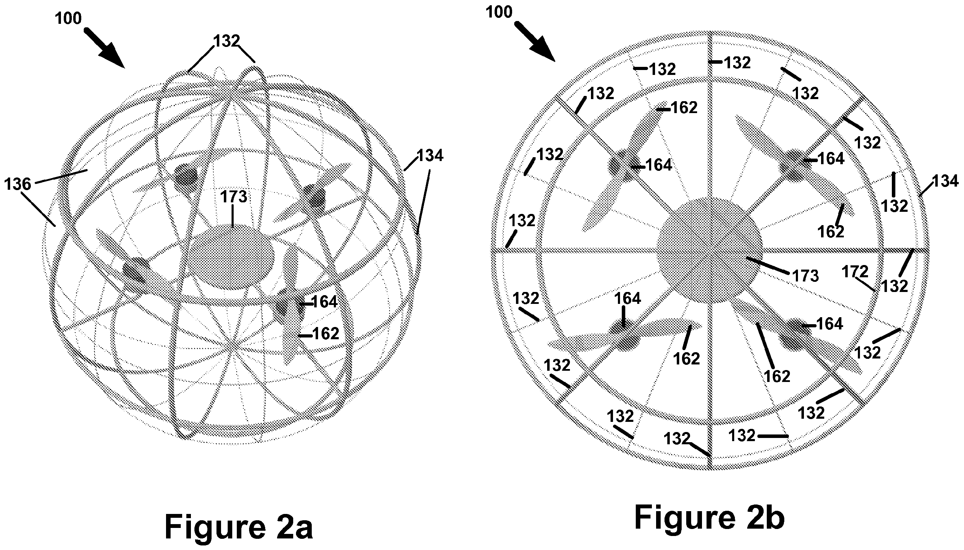

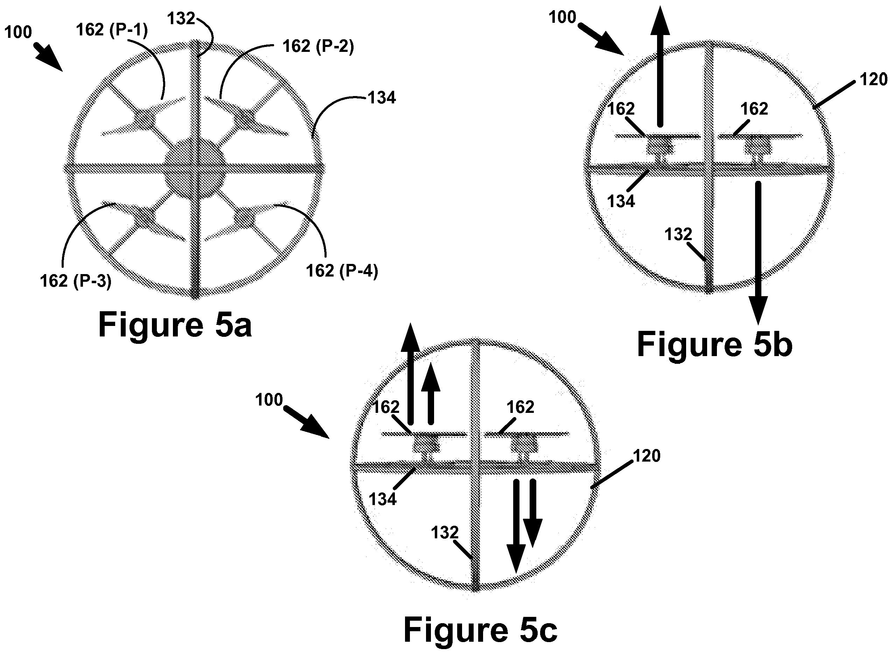

One example of a potential ground mode 114 is a rolling mode 116. An example of an apparatus 100 intended to provide users with the option of a rolling mode 116 is illustrated in Figures 2a-2d. The process for enabling an otherwise flight-worthy apparatus 100 to roll on the ground is illustrated in Figure 5a-6b. Enclosing the air vehicle assembly 150 facilitates the ability of users to utilize the apparatus 100 on the ground as well as in the air. The apparatus 100 can travel through pipes and other hard-to access locations by providing users with the option to operate the apparatus 100 in a ground mode 114, such as a rolling mode 116.

Another potential ground mode 114 implementation can involve moving on the ground by using, by way of example only, an asymmetric mass that will move coordinately and continuously the barycenter of the apparatus 100 to trigger continuous rolling.

Additional types of ground modes 114 can be implemented in different embodiments of the apparatus 100. For example, in many contexts it is both anticipated and desirable for the apparatus 100 to encounter obstacles on the ground. The apparatus 100 can include a slipping or jumping mode as a type of ground movement mode 114. When an obstacle is detected or encountered, such as a stone, step or a gap or if in a narrow space like a pipe or a cave, the apparatus 100 will benefit by the enclosed protection of the enclosure assembly 120. The elasticity of the enclosure assembly 120 coupled with a jumping and/or slipping mode as a type of ground mode 114 can enhance the ability of the apparatus to move in the direction and path is designed or commanded to go.

### C. Applications

It is anticipated that different apparatuses 100 will be configured for different types of contexts. The general capabilities of the apparatus 100 have a wide range of potential uses.

The apparatus 100 can be implemented as a toy or entertainment indoor/outdoor model. The enclosure assembly 120, particularly in a spherical shape 123, is safe to fly at home with a low risk of damage to things or injury to kids since the propeller 162 is not accessible with the hands. The elasticity in the bumps will prevent any damage. Such an embodiment can include additional padding for the enclosure assembly 120.

In the context of agriculture, the apparatus 100 can be used to monitor the fields and prevent plants from diseases.

The apparatus 100 can be used in wide variety of different inspection contexts, including tall buildings, bridges, and even plant inspection. The capability to move inside pipes as well as fly (reaching pipes in high positions) makes the apparatus 100 highly desirable in many contexts.

### II. CONTROL OF THE APPARATUS

Figure 1c is a block diagram illustrating an example of a user 98 interacting with the apparatus 100. The controller 99 is the means by which a user 98 can submit instructions 178 to the apparatus 100.

### A. User

A user 98 is not part of the apparatus 100. A user is typically a human being responsible for the operating of the apparatus 100. In some embodiments of the apparatus 100, the user can be information technology system, a robot, an expert system, some type of artificial intelligence component, or other similar form of a non-human user 98.

### B. Controller

A controller 99 is not part of the apparatus 100. A controller 99 is a mechanism by which instructions are submitted to the apparatus 100. In many contexts, the controller 99 is a wireless remote control unit or a device that includes the capability to create instructions 178 and then deliver the instructions 178 to the apparatus 100. Some embodiments of such a controller 99 can also be configured to receive feedback information from the apparatus 100.

Some embodiments of the apparatus 100 will function 100% on the basis of remote control instructions 178. Instructions 178 can be submitted to the apparatus 100 in one or more of the following different ways: (1) via remote control in real-time as the apparatus 100 operates; (2) via the controller 99 prior to the then current operation of the vehicle (pre-programmed); and/or (3) on-going algorithms/heuristics for "autonomous" action enabled within the apparatus 100.

### C. Instructions

An instruction 178 is any form of information or communication that can be received by the apparatus 100 and used, selectively or otherwise, to impact the motion and operation of the apparatus 100. Instructions 178 can include direct commands that pertain to the immediate movement of the apparatus 100, but the instructions 178 can include software, information, and other operating parameters that impact the apparatus 100 beyond its then-present operations.

### III. INTRODUCTION OF ELEMENTS

As illustrated in Figure 1a and as discussed above, the apparatus 100 is comprised of two subsidiary assemblies, an enclosure assembly 120 (the portion of the apparatus that encloses the drone) and an air vehicle assembly 150 (the drone that is enclosed within the protective enclosure).

### A. Enclosure Assembly

The enclosure assembly 120 can be comprised of a wide variety of different materials and configured in a wide variety of different shapes.

### 1. Different Types of Enclosure Assemblies

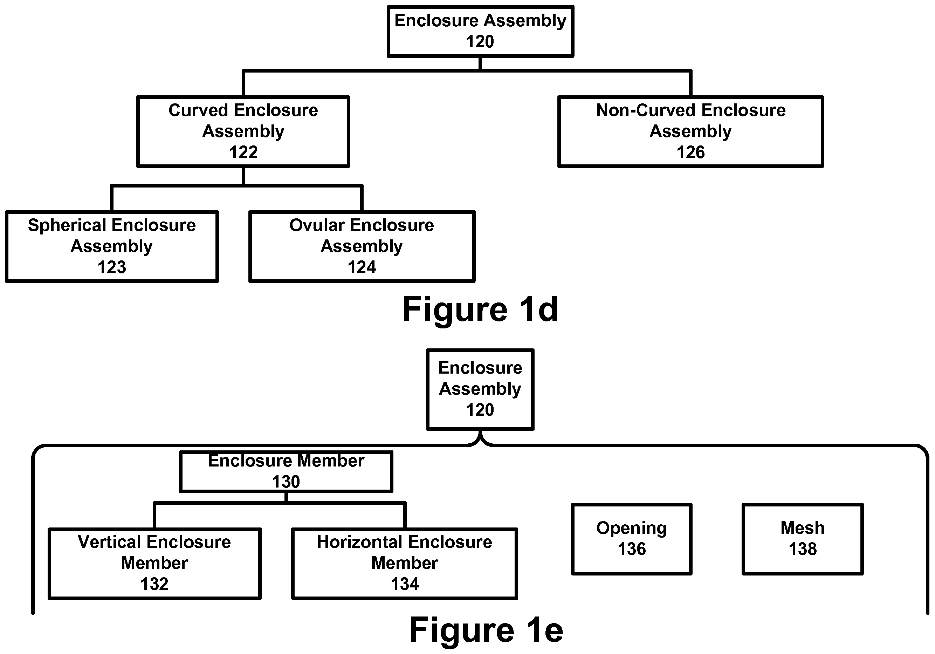

Figure 1d is a hierarchy diagram illustrating an example of the different types of enclosure assemblies 120 distinguished by shape.

### a. Curved Enclosure Assemblies

Some enclosure assemblies are referred to as curved enclosure assemblies 122 because those assemblies 120 have at last some curved surfaces. Examples of curved enclosure assemblies 122 include a spherical enclosure assembly 123, an ovular enclosure assembly 124, a cylindrical enclosure assembly, and other variations pertaining to shape. A spherical enclosure 123 is entirely or at least substantially spherical in shape. An ovular enclosure assembly 124 is entirely or at least substantially ovular in shape. Curved enclosure assemblies 122 need not be entirely curved or continuous curved. However, the nature of curves can enhance the ability of the apparatus 100 to function in a rolling mode 116. Examples of curved enclosure assemblies are illustrated in Figures 2a-3b.

### b. Non-Curved Enclosure Assemblies

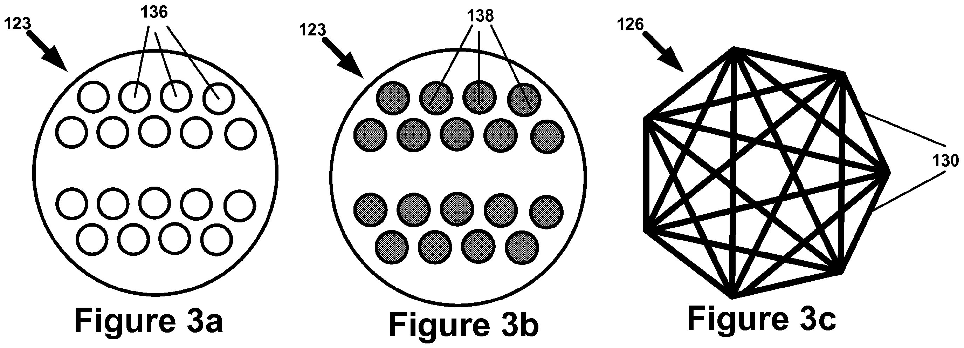

Returning to Figure 1d, non-curved enclosure assemblies 126 do not have any curved edges. Examples of non-curved enclosure assemblies 126 can include icosahedrons, dodecagons, icosagons, tricontagons, tetracontagons, penacontagons, hexcontagons, and other known polygon and other geometrical configurations. An example of a non-curved enclosure assembly 126 is illustrated in Figure 3c. Non-curved enclosure assemblies 126 can include the capability of operating in a rolling mode 116.

### 2. Enclosure Assembly Components

Figure 1e is a block diagram illustrating an example of the different types of components that can make up an enclosure assembly 120.

### a. Enclosure Member

An enclosure member 130 is a portion of the surface of enclosure assembly 120. Enclosure members 130 are not typically air permeable. The air flow required for the movement function generated by propellers 162 is provided by one or more openings 136 in the enclosure assembly 120.

### i. Vertical Enclosure Member

An enclosure member 130 that possesses a vertical or substantially vertical orientation within the enclosure assembly 120. A vertical enclosure member 132 can also be referred to a vertical member 132. Vertical enclosure members 132 are illustrated in Figures 2a-2d.

### ii. Horizontal Enclosure Member

An enclosure member 130 that possess a horizontal or substantially horizontal orientation within the enclosure assembly 120. A horizontal enclosure member 134 can also be referred to as a horizontal member 134. Horizontal enclosure members 132 are illustrated in Figures 2a-2d.

### b. Opening

An area in the surface of the enclosure assembly 120 that is air permeable. Openings 136 can be shaped in a wide variety of different geometries and configurations. In some embodiments, the openings 136 are simply spaces between members 130 or other totally vacant space in the surface of the enclosure assembly 120. In other embodiments, openings 136 are covered by a mesh 138. The opening 136 can also be referred to as an enclosure opening 136. Examples of openings 136 are illustrated in Figures 2a-2d and 3a-3c, although the openings in 3b are covered with a mesh 138

### c. Mesh/Filter

A screen, filter, or similar material that covers the opening 136 but nonetheless allows air to flow in and out of the enclosure 120. An example of a mesh 138 is illustrated in Figure 3b.

### B. Air Vehicle Assembly

The parts of the apparatus 100 that provide for the powered movement of the apparatus 100 are collectively referred to as the air vehicle assembly 150. Virtually any type of drone in the prior art (helicopter, plane, hybrid, other, etc.) can potentially benefit from being enclosed within an enclosure assembly 120.

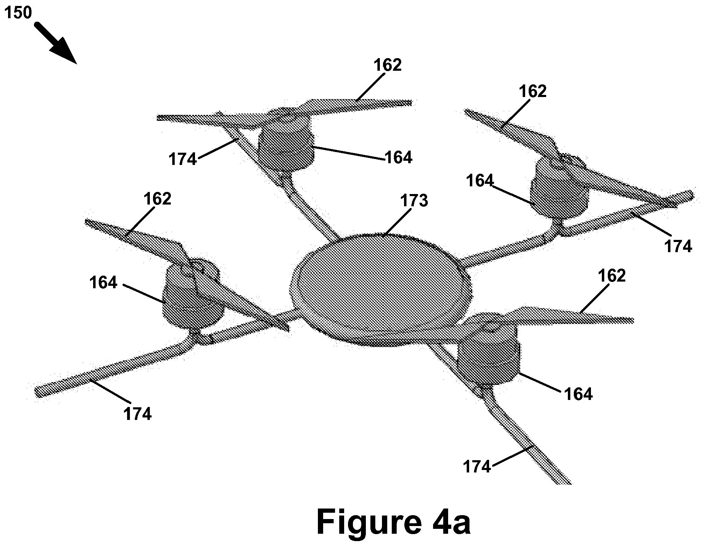

One category of air vehicle assembly 150 embodiments that is believed to be particularly useful is an quad-copter 160 which is identified in Figure 1a and illustrated in Figures 2a-2d and 4a. Although the quad-copter 160 embodiment of the vehicle assembly 150 was the original inspiration for the inventive apparatus 100, there are a high magnitude of variation and customization that can be incorporated into the air vehicle assembly 150 for the apparatus 100.

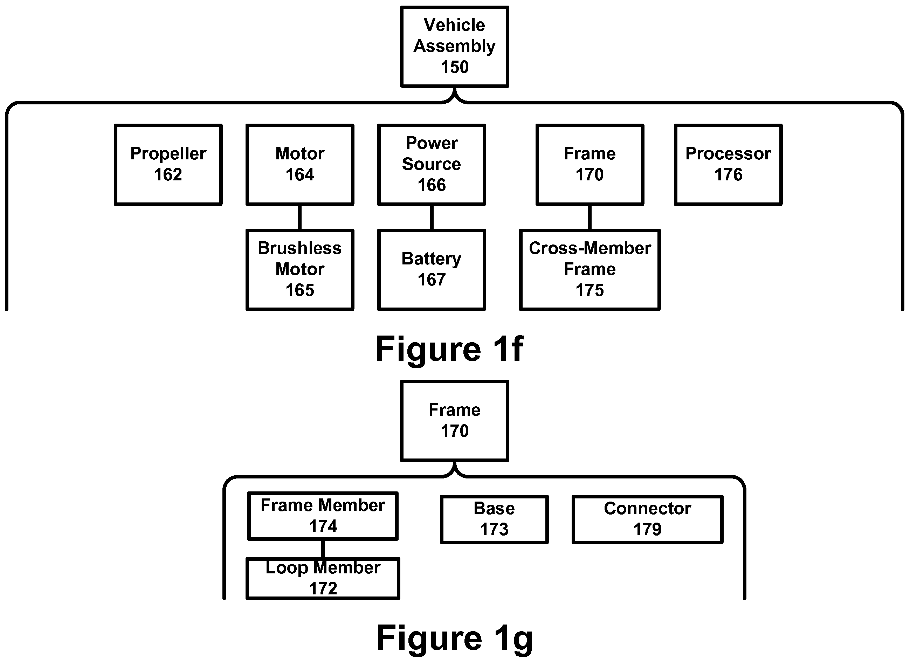

Figure 1f is a block diagram illustrating an example of the different types of components that can make up a vehicle assembly 150.

### 1. Propeller

The apparatus 100 will include one or more propellers 162. A propeller 162 is a component that propels the apparatus 100. Many embodiments include four or more propellers 162 because multiple propellers can assist in steering the vehicle in various operating modes 110. Some embodiments may include jet or rocket propulsion for use in addition to propellers 162 while in flight mode 112. A propeller 162 can direct airflow upwards or downwards when it spins.

The propellers 162 are the propulsion system for the air vehicle assembly 150 and the apparatus 100 as a whole. In a preferred quad-copter 160 embodiment, there are four symmetrical propellers162 acted on by brushless motors 165.

The driver control is designed to drive each propeller 162 in dual mode, obtaining direct and inverse thrust necessary for the rolling mode 116.

### 2. Motor

A motor 162 is a device that causes the propeller 162 to turn. Virtually any motor 162 used for a prior art drone can be incorporated as a motor 164 for the apparatus 100. Multiple propeller 162 embodiments will typically involve multiple motors 164. Many embodiments of the apparatus 100 will include a motor 164 that is a brushless motor 165.

### 3. Power Source

A power source 166 is any source of energy that can power the motor 164. Power sources can be batteries 167 (of different types), solar cells, and other power sources known in the prior art.

A battery 167 is a device that allows for energy to be stored for future use. A wide variety of different batteries 167 can be incorporated into the apparatus 100.

### 4. Frame

A frame 170 is a physical structure within the vehicle assembly 140 that serves to secure the position of many other components within the enclosure assembly 120. Many but not all frames 170 will be cross-member frames 175, a frame 170 that involves intersecting perpendicular members.

### a. Frame Members

Figure 1g is a block diagram illustrating an example of the different types of components that can make up the frame. Frames 170, which can be referred to frame members 172. In some embodiments, frame members 172 will be formed in the shape of loops and can be referred to as loop members 172.

### b. Base

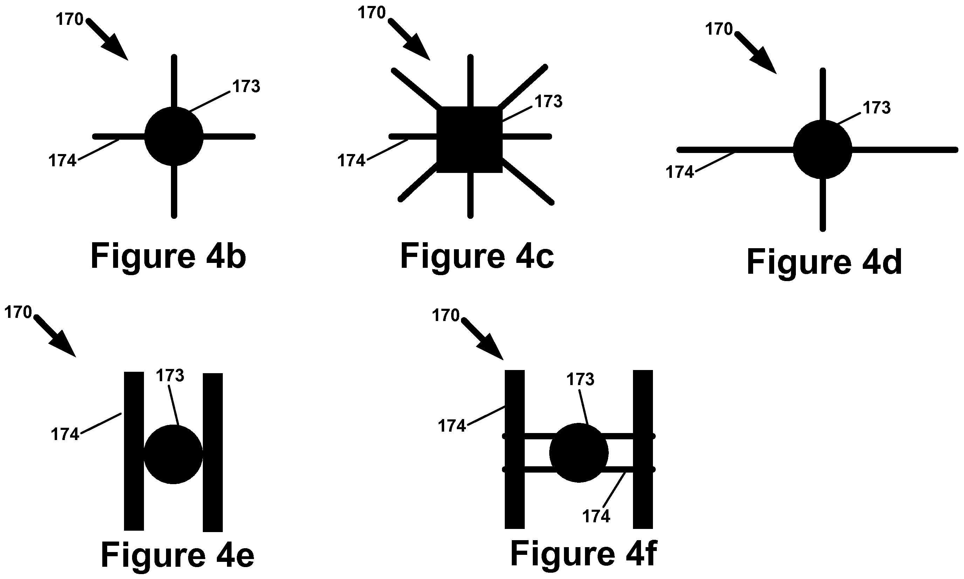

Frames 170 can also include a base 173 to support/hold virtually any other component of the apparatus 100, but in particular a computer processor 176 or a variety of supplemental components 180 that are discussed below. The geometry of a frame 170 can vary widely, just as the geometry of an enclosure assembly 120 can vary widely. Figures 4b-4h illustrate examples of frames 170 that can be incorporated into the apparatus 100.

By securing the position of many components of the air vehicle assembly 150 relative to the frame 170, the frame also servers to secure the position of those components with respect to the enclosure assembly 120 and the apparatus 100 as a whole.

### c. Connectors

A variety of different connectors 179 can either permanently or temporarily secure the frame 170 to the enclosure assembly 120. The frame 170 can be temporarily or permanently secured in the proper position within the enclosure assembly 120 by one or more connectors 179, such as welds, snaps, zippers, adhesives, solder, buttons, screws, nails, or any other type of connector known in the art.

### 5. Processor

Returning to Figure 1f, a processor 176 is potentially any electrical or computer device capable of regulating the motors 164 of the vehicle assembly 150. The processor 176 receives, directly or indirectly, instructions 178 from a remote control unit 180.

In some embodiments of the apparatus 100, the processor 176 can be a small and portable general purpose computer, such as a smart phone, tablet computer, wrist computer, or other similar device. Such embodiments allow users 98 to leverage devices and interfaces that they already possess, and are already familiar with. A general purpose computer device is a processor 176 that allows users 98 to install and remove software.

Mobile general purpose computer devices, and particularly smart phones, tablet computers, and other devices with the ability to access a broad range of different telecommunication networks can be a useful, convenient, easy to use, and relatively inexpensive way for users of a drone 100 to control, manage, and monitor the drone 100.

General purpose computers include a variety of different sensors, including but not limited to GPS, accelerometers, compasses, cameras, gyroscopes, video cameras, and microphones. They possess microprocessors and a library of existing software applications. Such devices can access phone networks, 811c networks, Bluetooth networks, and other networks of varying size and scope. General purpose computers thus already contain all the components necessary to control an autonomous aerial vehicle such as a drone 100.

By developing an original application that leverages the functionality from the processors 176 found in a smart phone, wrist computer, tablet computer, etc., the apparatus 100 no longer needs to possess a control board for governing the motors of the apparatus 100 and for other functions of the apparatus 100. Put another way, the smart phone or other similar device can serve as the central nervous system for the apparatus 100, making it easier for end users 98 to use since they are already familiar with the use of their device, and making the drone apparatus 100 less expensive.

The processor 176 can run flight and control software. Whether the processor 176 is an embedded computer or a general purpose computer, applications running on the processor 176 can be used for flight and control purposes. The processor 176 can also be used to support autonomous operations through the use of GPS, accelerometers, a compass, etc. Many of these functions are provided in general purpose computers, and as such, the apparatus 100 can avail itself to these functions. The processor 176 can provide telemetry and ground station connections by using a wireless network or phone network on board of smartphone, general purpose computer, or an embedded computer. The processor 176 can utilize a camera to download telemetry or multimedia material, the ground station will be represented by another general purpose computer device. Both general purpose computers and embedded computer devices can utilizes a variety of input/output interfaces, such as speakers, cameras, microphones, voice recognition software, wireless links, etc.

In addition to autonomous drone 100 activity, the processor 176 can provide for remote control of the drone 100 through another general purpose computer device or other processor outside the drone 100. A variety of different approaches can be used to remotely control the drone 100.

The drone apparatus 100 can utilize voice recognition and the speaker on board of the smartphone (or other general purpose computer device) directly. No any other accessory to operate the drone apparatus 100 is necessary. It can also operate fully or partially in an autonomous mode. The apparatus 100 can utilize a smart phone, some other form of general purpose computer, or an embedded processor by using a wireless connection. It can be possible to pilot the drone 100 or to see the imaged sent by the drone camera from another smartphone.

The processor 176, whether in the form of a smart phone, another form of general purpose computer, or an embedded computer, can in some embodiments of the apparatus 100, be readily added and removed from the apparatus 100. Different users 98 of the apparatus 100 can plug in their own processor 176 to the apparatus 100. In many such embodiments, the processor 176 will be in an enclosed area of the base 173.

The processor 176 can enable the apparatus 100 to function in a purely autonomous mode, able to recognize the position of specific objects or location of specific rooms in a house or any other indoor or outdoor ambient, that will allow to use other complex functions in couple with the voice recognition as command input to act some simple actions like turn on/off light, monitor the behavior of other objects/electrical equipment as an oven, sprinkler, dryer, check the status of some human activities, in other words the possibility to be used as an assistant or a sort of steward . A dedicated SW will allow to the drone the interaction and recognition the with things/equipment,

A drone apparatus 100 utilizing a commercially available general purpose computer device as a processor 176 for the drone 100 is a benefit to drone manufacturers, users, and suppliers of computer software. A variety of different mounting brackets or other similar mechanisms can be used to physically secure the smart phone or other form of general purpose computer onto the apparatus 100.

### C. Supplemental Components

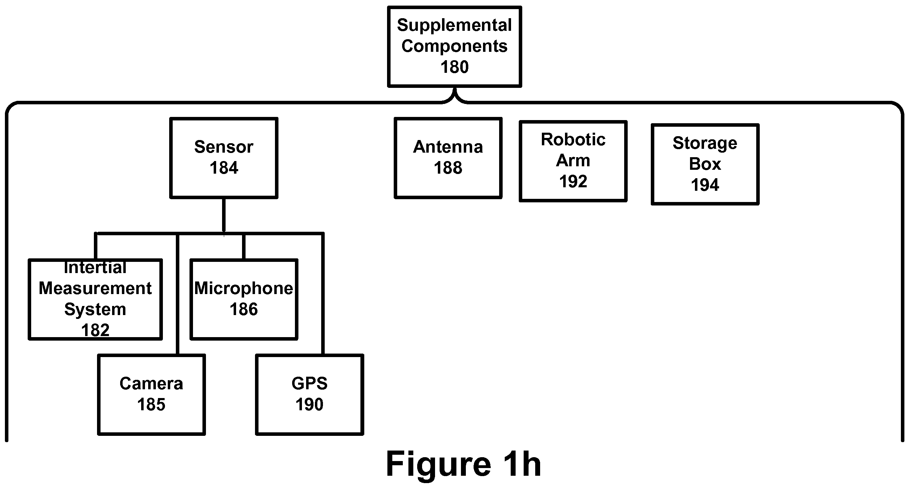

Figure 1h is a block diagram illustrating an example of the different types of components 180 that can serve as supplemental components for the apparatus.

### 1. Sensors

A sensor 184 is potentially any device that captures information. Many embodiments of the apparatus 100 will process sensor-captured information for the purposes of navigation, but there can be other purposes as well. For example, an apparatus 100 with a sensor 184 could be used to identify cracks in hard to reach infrastructure such as bridges, tall buildings, etc.

Examples of potentially relevant sensor types include cameras 185, microphones 186, GPS 190, and inertial measurement systems 182.

### 2. Antenna

An antenna 188 is a device that can assist in the transmission and receiving of communications and other forms of information.

### 3. Robotic Arm

A robotic arm 192, or other similar action-based component, can be controlled via remote control or can be programmed to act autonomously based on prior programming. Such an arm 192 can be retractable.

### 4. Storage Box

A storage box 194 is a container on the apparatus 100 that can be used to store and deliver a package. Some embodiments of the apparatus 100 can be used to deliver packages, supplies, medicines, etc. to recipients in hard to reach places.

### IV. DETAILED EXAMPLE OF AN APPARATUS AS A WHOLE

Figure 2a is a perspective diagram illustrating an example of an apparatus 100. The apparatus in Figure 2a is an example of quad-copter 160 embodiment of an air vehicle assembly 150 and a spherical 123 embodiment of an enclosure assembly 120.

There are four propellers 162 positioned in the same horizontal plane. Each propeller 162 has a motor 164 underneath it. There are eight vertical loops embodying 16 vertical enclosure members 132 and five horizontal loops embodying 10 horizontal enclosure members 134.

The shape of the apparatus 100 is spherical (or at least substantially spherical) and it has the capability to fly 112 in the air as well as to move 114 on the ground. All the movement functions can be controlled and operated remotely by using a remote control 99. A camera 185, and other sensors 184 as well as other supplemental components 180 can be embedded in the base 173 or on the base 173.

The apparatus 100 is safer than prior art drones. In a preferred embodiment, the enclosure assembly 120 is elastic or at least substantially elastic. Coupled with a rolling mode 116 that includes a substantial steering capability, damage to the apparatus 100 from bumps can be avoided.

The apparatus 100 can be easy way to land. It is possible to land in any attitude of the propellers plane since the enclosure assembly 120 protects and prevents the apparatus 100 from incurring harsh bumps.

During the take-off phase is possible to manually launch the quad-copter 160 and other embodiments of the apparatus 100 as a ball, with the user 98 throwing the apparatus 100 with their hands. This is possible because the enclosure assembly 120 prevents the hands of the user 98 from coming into contact with the propellers 162.

With a single apparatus 100 being able to move in two or more operating modes 110, the apparatus 100 can become a double-purpose device. The air and ground movement capabilities can provide unique opportunities not even thought up because the capability doesn't currently exist. One particular feature that could be quite valuable is the ability of the apparatus 100 to roll into a pipeline as part of the inspection process.

The rolling mode 116 can provide impressive speed and control capabilities. Prior art drones presently are controlled by a plane approach (roll, pich and yaw) that's because the drone identify a nose and wings are reference plane.

The spherical shape of the apparatus 100 can provide an entirely new way to pilot/control a drone. The apparatus 100 can be provided with a special sensor 184 that recognize in run-time the orientation of the remote control 99 with regards the orientation of the nose of the apparatus 100, so the user 98 does not have to refer to the nose drone direction to control it but just to the heading of the remote control 99 that is the user 98 orientations.

Figure 2b is a top view diagram illustrating an example of the apparatus 100 displayed in Figure 2a.

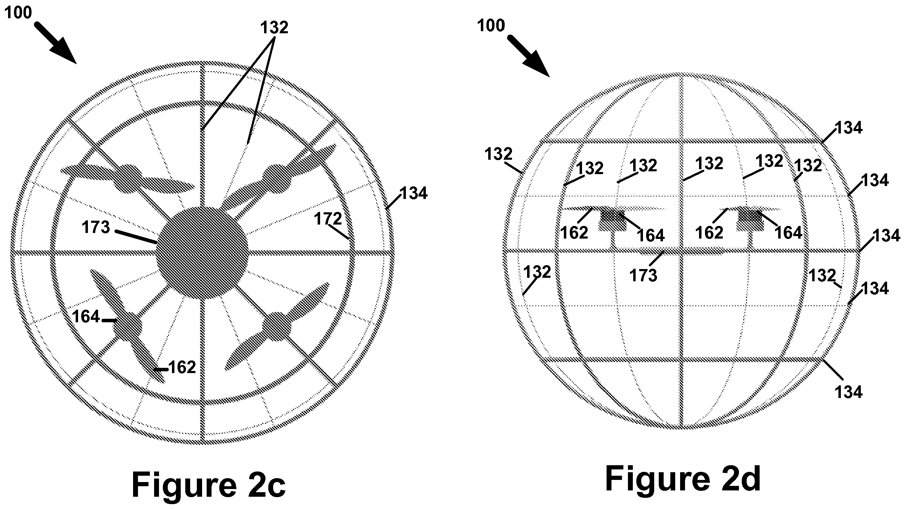

Figure 2c is a bottom view diagram illustrating an example of the apparatus 100 displayed in Figures 2a and 2b.

Figure 2d is a side view diagram illustrating an example of the apparatus 100 displayed in Figures 2a-2c..

### V. ENCLOSURE ASSEMBLY

Figure 3a is side view diagram illustrating an example of an enclosure assembly.

Figure 3b is a side view diagram illustrating an example of an enclosure assembly.

Figure 3c is a perspective view diagram illustrating an example of an enclosure assembly that is not curved.

### VI. AIR VEHICLE ASSEMBLY

Figure 4a is a perspective view diagram illustrating an example of an air vehicle assembly.

Figure 4b is a top view diagram illustrating an example of a frame.

Figure 4c is a top view diagram illustrating an example of a frame.

Figure 4d is a top view diagram illustrating an example of a frame.

Figure 4e is a top view diagram illustrating an example of a frame.

Figure 4f is a top view diagram illustrating an example of a frame.

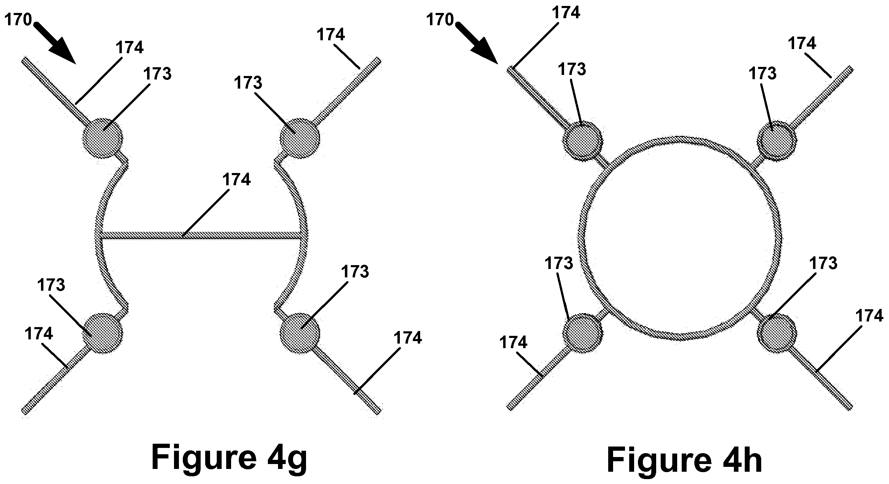

Figure 4g is a top view diagram illustrating an example of a frame.

Figure 4h is a top view diagram illustrating an example of a frame.

### VII. ROLLING MODE AND STEERING

Figure 5a is a top view diagram illustrating an example of an apparatus 100. The illustrated embodiment of the apparatus 100 is that of a quad-copter 160 in a substantially spherical enclosure assembly 123. The apparatus 100 includes both vertical enclosure members 132 and horizontal enclosure members 134. There are four propellers 162 illustrated in Figure 5a. Those propellers are designated as P-1, P-2, P-3, and P-4.

### A. Rolling Mode

Figure 5b is a side view diagram illustrating an example of an apparatus 100 in a rolling operating mode 116. The air flows generated by P-1 and P-3 are directed upwards, while the air flows generated by P-2 and P-4 are directed downwards. The collective impact of those air flows causes the apparatus 100 to roll in a clockwise direction moving the apparatus 100 to the right as the rolling continues.

Put another way, torque is generated by applying opposite thrust in the propellers couples P-1/P-3 and P-2/P-4. To generate the rolling mode P-1 and P-3 have an opposite thrust of the P-2 and P-4. In this way it is possible to generate a torque, this torque will generate a rolling movement on the horizontal floor.

### B. Steering While in Rolling Mode

Figure 5c is a side view diagram illustrating an example of how an apparatus 100 can be steered while in a rolling mode 116. Magnitude differences in the upward airflows generated by P-1 and P-3 as well as the magnitude differences in the downward airflows generated by P-2 and P-4 can steer the apparatus 100 while it rolls along a ground or floor surface.

Put another way, for steering during the rolling mode 116 it is simple to unbalance the thrust generates by the propellers 162 on the same direction of the thrust (P1/P3 or P2/P4).

### C. Process Flow Views

### 1. Flow Chart #1

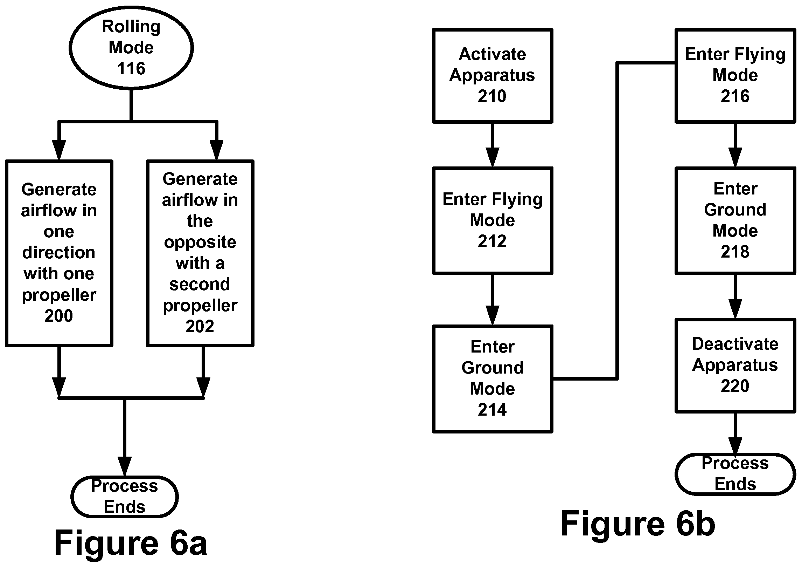

Figure 6a is a flow chart diagram illustrating an example of a rolling operating mode. Once a rolling mode 116 instruction effectuated by the apparatus 100, the apparatus 100 generates a downward airflow direction from one or more propellers 162 located at what is to the be direction of the movement of the apparatus 100 (the temporary "front" of the apparatus 100), and an upward airflow direction from one or more propellers 164 located at what is to be opposite to the direction of the movement of the apparatus 100 (the temporary "rear" of the apparatus 100). Figure 6a corresponds to the illustration in Figure 5b. While in rolling mode 116, the apparatus 100 can be steered as illustrated in Figure 5c above.

As indicated in Figure 6a, a two-propeller 162 embodiment of the apparatus 100 can implement a rolling mode 116 of movement. Only one propeller 162 at 200 is required for generating upward airflow and only one propeller 162 at 202 is required for generating downward airflow. Having four or more propellers 162 facilitates the ability to steer the apparatus 100 while in a rolling mode 116. If only two propellers 162 are present, steering would require some alternative mechanism or it is possible that a differentiation based on magnitude of the airflow could provide some steering capability.

During the propulsion of the apparatus 100 in a rolling mode 116, the apparatus 100 can use an inclinomenter and a gyro sensor system to control the propellers 162 dedicated to the propulsion in the rotation speed and direction by acting coordinated with the rolling mode 116. The motion controls needs to maintain stable the direction

### 2. Flow Chart #2

Figure 6b is a flow chart diagram illustrating an example of an apparatus 100 switching back and forth between various operating modes 110.

At 210 the apparatus 100 is activated. In some embodiments this itself can be done remotely. In others, it requires the user 98 to be in the physical presence of the apparatus 100.

At 212 the apparatus 100 enters flying mode 112. This typically involves having all propellers 162 generating a downward airflow that lifts up the apparatus 100 into the air. Steering is achieved by differentiating the magnitude of the airflows at different positions in the apparatus 100.

At 214 the apparatus 100 enters a ground mode 114, such as a rolling mode 116. This should be done after the apparatus 100 is flown to the ground or close to the ground to prevent excessive bumping when the apparatus 100 touches the ground. In a rolling mode 116, some of the airflows generated by some of the propellers 162 will be in an upward direction.

At 216, the apparatus 100 can transition from ground mode 114 to flying mode 112. This typically involves having all airflows directed in a downwards direction. The transition from rolling mode 116 to flying mode 112 can be actuated by a command to fly. An inclinometer system in communication with the processor 176 can automatically recognize when the proper conditions exist to switch in the flying mode 112 (i.e. when the orientation of the propellers 162 plane is horizontal such that airflow in a downwards direction will left the apparatus 100 straight up). The apparatus 100 can be configured to not allow a transition from ground mode 114 to flying mode 112 unless the orientation of the apparatus 100 is suitable or at least acceptable. Once flight mode 112 has been successfully actuated, the control over the apparatus 100 is consistent with prior art approaches.

At 218, the apparatus 100 can transition back from a flying mode 112 to a ground mode 114, such as a rolling mode 114, as discussed above.

At 220, the apparatus 100 can be deactivated, powered down, etc. for the purposes of storage after its use is completed.

### VIII. INDEX OF ELEMENTS

Table 1 below comprises an index of elements, element numbers, and element descriptions.

**Table 1.**

| **Number** | **Element Name** | **Element Description** |
|---|---|---|
| 98 | User | Human being or external computer system that provides instructions 178 to the apparatus 100. |
| 99 | Remote Control Unit | The apparatus 100 can be configured to perform pre-programmed activities, including autonomous actions based on various algorithms, expert systems, artificial intelligence, etc. The apparatus 100 can also be configured to receive instructions 178 remotely from a remote control unit 180. The remote control unit 180 is not part of the apparatus 100. The remote control unit 99 can also be referred to as a controller 99. |
| 100 | Apparatus | An unmanned aerial vehicle ("UAE"). The apparatus 100 can also referred to as a "drone" or "drone apparatus". The apparatus 100 includes an enclosure assembly 120 that protects an air vehicle assembly 150 positioned within the enclosure assembly 120. The apparatus 100 is capable of operating in more than one mode of transportation, including a ground operating mode 114. The apparatus 100 can be comprised of a wide variety of materials, including but not limited to plastic, metal, wood, ceramics, and other materials. |
| 110 | Operating Mode | A mode of motion or transportation pertaining to the apparatus 100. The apparatus 100 can configured to operate in two or more modes 110. |
| 112 | Flight/Flying Mode | An operating mode 110 that involves flying through the air. Can also be referred to as a flying operating mode 112. The apparatus 112 can include a variety of different types of flying mode, some primarily resembling helicopter flight, some primarily resembling the flying mechanisms of an airplane, and others embodying a hybrid approach. |
| 114 | Ground Mode | An operating mode 110 that involves moving while substantially staying in contact with the ground. |
| 116 | Roll/Rolling Mode | An operating mode 110 that involves the apparatus 100 rolling on the ground. A rolling mode 116 is an example of a ground mode 114, and it is typically but not always associated with a curve-shaped enclosure assembly 122. |
| 120 | Enclosure Assembly | An air-permeable assembly that houses the air vehicle assembly 150. The enclosure assembly serves 150 to protect the air vehicle assembly from the outside world, and the outside world from the air vehicle assembly. The enclosure assembly can also facilitate the ability of the apparatus to roll 116, and other similar ground operating modes 114. The enclosure assembly 120 can be comprised of a wide variety of materials, but it is typically advantageous to utilize a relatively elastic material such polyvinyl chloride ("PVC"), polyethylene ("PE"), polystyrene ("PS"), polypropylene ("PP"), other types of general plastic, rubber, or similar elastic or partially elastic materials. The enclosure assembly 120 can also be referred to simply as an enclosure 120. |
| 122 | Curved Enclosure Assembly | An enclosure assembly 120 that possesses at least a curved shape. A curved shape can facilitate the rolling mode 116 of a vehicle. |
| 123 | Spherical Enclosure Assembly | An enclosure assembly 123 that is spherical or substantially spherical in shape. A spherical enclosure assembly 123 is often highly desirable in terms of providing users of the apparatus 100 with adequate control and performance attributes in multiple operating modes 110. |
| 124 | Oval Enclosure Assembly | An enclosure assembly 124 that is ovular or substantially ovular in shape. |
| 126 | Non-Curved Enclosure Assembly | Many embodiments of the apparatus 100 can include an enclosure assembly 120 that does not include curved edges. Examples of such embodiments include icosahedrons, dodecagons, icosagons, tricontagons, tetracontagons, penacontagons, hexcontagons, and other known geometrical configurations. |
| 130 | Enclosure Member | The enclosure assembly 120 can be comprised of various enclosure members 130. Enclosure members 130 can also be referred to as members 130. |
| 132 | Vertical Enclosure Member | An enclosure member 130 that possesses a vertical or substantially vertical orientation within the enclosure assembly 120. A vertical enclosure member 132 can also be referred to a vertical member 132. |
| 134 | Horizontal Enclosure Member | An enclosure member 130 that possess a horizontal or substantially horizontal orientation within the enclosure assembly 120. A horizontal enclosure member 134 can also be referred to as a horizontal member 134. |
| 136 | Opening | An area in the surface of the enclosure assembly 120 that is air permeable. Openings 136 can be shaped in a wide variety of different geometries and configurations. In some embodiments, the openings 136 are simply spaces between members 130 or other totally vacant space in the surface of the enclosure assembly 120. In other embodiments, openings 136 are covered by a mesh 138. The opening 136 can also be referred to as an enclosure opening 136. |
| 138 | Mesh | A screen, filter, or similar material that covers the opening 136 but nonetheless allows air to flow in and out of the enclosure 120. |
| 150 | Vehicle Assembly | An assembly within the enclosure 120 that provides the apparatus 100 with the capability to move. The vehicle assembly 150 can be implemented in a wide variety of different ways known in the prior art. The vehicle assembly 150 can include virtually any component or subassemblies known in the prior art with respect to drone technology. Virtually any type of air vehicle can benefit from being enclosed in an enclosure assembly 120. The vehicle assembly 150 can also be referred to as an air vehicle assembly. |
| 160 | Quad-Copter | An embodiment of the vehicle assembly 160 that involves a frame 170 and four propellers 162. In some embodiments of a quad-copter 160, the four propellers 162 are equidistant from each other and positioned within the same horizontal plane and pointing in the same direction. |
| 162 | Propeller | The apparatus 100 will include one or more propellers 162. Many embodiments include four or more propellers 162 because multiple propellers can assist in steering the vehicle in various operating modes 110. Some embodiments may include jet or rocket propulsion for use in addition to propellers 162 while in flight mode 112. |
| 164 | Motor | A motor 162 is a device that causes the propeller 162 to turn. Virtually any motor 162 used for a prior art drone can be incorporated as a motor 164 for the apparatus 100. Multiple propeller 162 embodiments will typically involve multiple motors 164. |
| 165 | Brushless Motor | Many embodiments of the apparatus 100 will include a motor 164 that is a brushless motor 165. |
| 166 | Power Source | A power source 166 is any source of energy that can power the motor 164. Power sources can be batteries 167 (of different types), solar cells, and other power sources known in the prior art. |
| 167 | Battery | A battery 167 is a device that allows for energy to be stored for future use. A wide variety of different batteries 167 can be incorporated into the apparatus 100. |
| 170 | Frame | A physical structure within the vehicle assembly 140 that serves to secure the position of many other components within the enclosure assembly 120. |
| 172 | Loop Member | A frame member 174 in the form curved loop. Some embodiments of the air vehicle assembly 150 may use a loop member 172 for structural support within the enclosure assembly 120. |
| 173 | Base | A structure on the frame that can be used to support various components on the air vehicle assembly 150. Not all embodiments of the vehicle assembly 150 will include a base 173. |
| 174 | Frame Member | A member within the frame 170. The frame 170 can be embodied in a wide variety of different frame member configurations 174. The frame member 174 can also be referred to simply as a member 174. |
| 175 | Cross Member | A configuration of frame 170 in which frame members 174 are positioned in a perpendicular manner with respect to each other. |
| 176 | Processor | Any electrical or computer device capable of regulating the motors 164 of the vehicle assembly 150. The processor 176 receives, directly or indirectly, instructions 178 from a remote control unit 180. The processor 176 can also provide for automated pre-programmed operations of the apparatus 100. |
| 178 | Instructions | The apparatus 100 can be configured to perform pre-programmed activities, including autonomous actions based on various algorithms, expert systems, artificial intelligence, etc. The apparatus 100 can also be configured to receive instructions 178 remotely from a remote control unit 180. The remote control unit 180 is not part of the apparatus 100. |
| 179 | Connectors | The frame 170 can be temporarily or permanently secured in the proper position within the enclosure assembly 120 by one or more connectors 179, such as welds, snaps, zippers, adhesives, solder, buttons, screws, nails, or any other type of connector known in the art. |
| 180 | Supplemental Components | An optional component of the apparatus 100 that performs a specific function. Examples of supplemental components includes inertial measurement systems 182, sensors 184 such as cameras 185 and microphones 186, antenna 188 to facilitate communication between the apparatus 100 and external communication points, GPS 190, robotic arms 192, lockable storage boxes 194, and virtually any other component that can be built into the apparatus 100 to serve a particular use or need. |
| 182 | Inertial Measurement System | An inertial measurement system can assist the processor 176 in implementing the transition between different operating modes 110 as well as other motion/position control functions. |
| 184 | Sensor | A sensor 184 is potentially any device that captures information. |
| 185 | Camera | A camera 185 is a sensor 184 that captures visual information, either as still frame images and/or as video. |
| 186 | Microphone | A microphone is a sensor 184 that captures sound. |
| 188 | Antenna | An antenna is a device that can assist in the transmission and receiving of communications and other forms of information. |
| 190 | GPS | A global positioning system ("GPS") can assist the apparatus 100 in navigation. |
| 192 | Robotic Arm | A robotic arm 192can be controlled via remote control or can be programmed to act autonomously based on prior programming. |
| 194 | Storage Box | A container on the apparatus 100 that can be used to store and deliver a package. |

### IX. ALTERNATIVE EMBODIMENTS

In accordance with the provisions of the patent statutes, the principles and modes of operation of this invention have been explained and illustrated in preferred embodiments. However, it must be understood that this invention may be practiced otherwise than is specifically explained and illustrated without departing from its spirit or scope.

The apparatus 100 can be implemented in a wide variety of different ways using a wide variety of different materials, geometric shapes, and operating configurations. The apparatus 100 is conceptually broad enough to incorporate virtually any type of UAV capable of being partially, substantially, or fully enclosed in an enclosure assembly 120.

## Claims

1. An enclosed drone apparatus (100), comprising:
(a) an elastic enclosure assembly (120) including a plurality of intersecting enclosure members (130) with a plurality of enclosure openings (136) therein; and
(b) an air vehicle assembly (150) securely positioned within said enclosure assembly (120), said air vehicle assembly (150) comprising a plurality of propeller couples (P-1/P-3 and P-2/P-4),
wherein said drone apparatus (100) is configured to operate in a plurality of modes (110), said plurality of modes (110) including a flight mode (112) and a ground mode (114),
wherein said ground mode (114) includes a rolling mode (116) where a first of said propeller couples (P-1/P-3) rotate to cause air movement in a first upward direction and a second of said propeller couples (P-2/P-4) rotate to cause air movement in a second downward direction opposing said first upward direction,
wherein in said flight mode (112) said multiple propeller sets (P-1/P-3 and P-2/P-4) all rotate to cause air movement in said second downward direction, and
**characterised in that** magnitude differences in the airflows between said propellers (162) of said plurality of propeller couples steer said drone apparatus (100) when in said rolling mode (116).

2. The drone apparatus (100) of claim 1, said drone apparatus further comprising a processor (176) that provides for receiving an instruction (178) from a remote control unit (99).

3. The drone apparatus (100) of claim 1, wherein said enclosure assembly (120) is a substantially spherical enclosure assembly (123).

4. The drone apparatus (100) of claim 3, wherein said plurality of enclosure members (130) includes a plurality of horizontal enclosure members (134) and a plurality of vertical enclosure members (132), and wherein said plurality of enclosure openings (136) are filled by a plurality of air-permeable mesh surfaces (138).

5. The drone apparatus (100) of claim 1, wherein said air vehicle assembly (150) is a quad-copter air vehicle (160).

6. The drone apparatus (100) of claim 1, wherein said plurality of propellers (162) are located within the same horizontal plane.

7. The drone apparatus (100) of claim 1, wherein said air vehicle assembly (150) further includes a frame (170), wherein said propeller couples (P-1/P-3 and P-2/P-4) are attached to said frame (170), and wherein a plurality of connectors (179) connect said frame (170) to said elastic enclosure assembly (120).

8. The drone apparatus (100) of claim 1, wherein said air vehicle assembly (150) further includes:
a frame (170), said frame comprising a plurality of frame members (174) and a base;
wherein said propeller couples (P-1/P-3 and P-2/P-4) are positioned on said plurality of frame members (174); and
wherein said propeller couples (P-1/P-3 and P-2/P-4) are each positioned facing upwards from said plurality of frame members (174) when in said flight mode.

9. The drone apparatus (100) of claim 1, said drone apparatus (100) further comprising an inertial measurement system (182), a camera (185), an antenna (188), and a GPS device (190).

10. A method for operating a drone apparatus (100) in a plurality of modes (110) including a ground mode (114), wherein said drone apparatus (100) includes a plurality of propeller couples (P-1/P-3 and P-2/P-4) within a spherical enclosure and wherein said ground mode (114) includes a rolling operation mode (116), said method being **characterised by** comprising:
selectively reversing air flow direction for at least one couple of said propeller couples (P-1/P-3 and P-2/P-4) causing a first of said propeller couples (P-1/P-3) to cause air movement in a first upward direction and a second of said propeller couples (P-2/P-3) to cause air movement in a second downward direction when said drone apparatus (100) is in said rolling mode (116), and
thereby in said rolling mode, rolling and steering said spherical enclosure.

11. The method for operating a drone apparatus (100) of claim 10, wherein said drone apparatus (100) includes at least four said propellers (162), said method comprising selectively reversing said air flow direction for at least two said propellers (162) when said drone apparatus (100) is in a ground mode (114).

12. The method for operating a drone apparatus (100) of claim 10, said method further comprising:
receiving an instruction (178) from a remote control unit (99); and
changing said operation mode (110) in accordance with said instruction (178).

13. The method for operating a drone apparatus (100) of claim 10, said method further comprising:
changing said drone apparatus (100) from a flying operating mode (112) to said rolling operating mode (116) by reversing the airflow of at least one propeller couple of said plurality of propeller couples (P-1/P-3 and P-2/P-4).

14. The method for operating a drone apparatus (100) of claim 10, wherein said drone apparatus (100) includes an air vehicle assembly (160) that includes said plurality of propeller couples (P-1/P-3 and P-2/P-4), and wherein the propellers (162) of the propeller couples (P-1/P-3 and P-2/P-4) are adjacent to each other.

15. The method for operating a drone apparatus (100) of claim 10, further comprising selectively steering the drone apparatus (100) using magnitude differences between said propellers of said plurality of propeller couples (P-1/P-3 and P-2/P-4).

## Patentansprüche

1. Umschlossene Drohnenvorrichtung (100), die Folgendes enthält:
(a) eine elastische Gehäuseanordnung (120), die mehrere sich kreuzende Gehäuseelemente (130) mit mehreren darin befindlichen Gehäuseöffnungen (136) enthält; und
(b) eine Luftfahrzeuganordnung (150), die in der Gehäuseanordnung (120) fest positioniert ist, wobei die Luftfahrzeuganordnung (150) mehrere Propellerpaare (P-1/P-3 und P-2/P-4) enthält, wobei
die Drohnenvorrichtung (100) konfiguriert ist, in mehreren Modi (110) zu arbeiten, wobei die mehreren Modi (110) einen Flugmodus (112) und einen Bodenmodus (114) enthalten,
der Bodenmodus (114) einen Rollmodus (116) enthält, in dem sich die Propeller eines ersten der Propellerpaare (P-1/P-3) drehen, um eine Luftbewegung in einer ersten Aufwärtsrichtung zu bewirken, und sich die Propeller eines zweiten der Propellerpaare (P-2/P-4) drehen, um eine Luftbewegung in einer zweiten Abwärtsrichtung, die der ersten Aufwärtsrichtung entgegengesetzt ist, zu bewirken, und
im Flugmodus (112) sich alle Propeller der mehreren Propellergruppen (P-1/P-3 und P-2/P-4) drehen, um eine Luftbewegung in der zweiten Abwärtsrichtung zu bewirken,
**dadurch gekennzeichnet, dass** Mengendifferenzen der Luftdurchflüsse zwischen den Propellern (162) der mehreren Propellerpaare die Drohnenvorrichtung (100) lenken, wenn sie sich im Rollmodus (116) befindet.

2. Drohnenvorrichtung (100) nach Anspruch 1, wobei die Drohnenvorrichtung ferner einen Prozessor (176) enthält, der das Empfangen einer Anweisung (178) von einer Fernsteuereinheit (99) zur Verfügung stellt.

3. Drohnenvorrichtung (100) nach Anspruch 1, wobei die Gehäuseanordnung (120) eine im Wesentlichen kugelförmige Gehäuseanordnung (123) ist.

4. Drohnenvorrichtung (100) nach Anspruch 3, wobei die mehreren Gehäuseelemente (130) mehrere horizontale Gehäuseelemente (134) und mehrere vertikale Gehäuseelemente (132) enthalten und die mehreren Gehäuseöffnungen (136) durch mehrere luftdurchlässige Gewebeoberflächen (138) gefüllt sind.

5. Drohnenvorrichtung (100) nach Anspruch 1, wobei die Luftfahrzeuganordnung (150) ein Quadrocopter-Luftfahrzeug (160) ist.

6. Drohnenvorrichtung (100) nach Anspruch 1, wobei sich die mehreren Propeller (162) in derselben horizontalen Ebene befinden.

7. Drohnenvorrichtung (100) nach Anspruch 1, wobei die Luftfahrzeuganordnung (150) ferner einen Rahmen (170) enthält, die Propellerpaare (P-1/P-3 und P-2/P-4) am Rahmen (170) befestigt sind und mehrere Verbindungselemente (179) den Rahmen (170) mit der elastischen Gehäuseanordnung (120) verbinden.

8. Drohnenvorrichtung (100) nach Anspruch 1, wobei die Luftfahrzeuganordnung (150) ferner Folgendes enthält:
einen Rahmen (170), wobei der Rahmen mehrere Rahmenelemente (174) und eine Basis enthält; wobei
die Propellerpaare (P-1/P-3 und P-2/P-4) an den mehreren Rahmenelementen (174) angeordnet sind; und
die Propellerpaare (P-1/P-3 und P-2/P-4) im Flugmodus jeweils von den mehreren Rahmenelementen (174) nach oben weisend angeordnet sind.

9. Drohnenvorrichtung (100) nach Anspruch 1, wobei die Drohnenvorrichtung (100) ferner ein Trägheitsmesssystem (182), eine Kamera (185), eine Antenne (188) und eine GPS-Vorrichtung (190) enthält.

10. Verfahren zum Betreiben einer Drohnenvorrichtung (100) in mehreren Modi (110), die einen Bodenmodus (114) enthalten, wobei die Drohnenvorrichtung (100) mehrere Propellerpaare (P-1/P-3 und P-2/P-4) in einem kugelförmigen Gehäuse enthält und der Bodenmodus (114) einen Rollbetriebsmodus (116) enthält, wobei das Verfahren **gekennzeichnet ist durch**
wahlweises Umkehren der Luftdurchflussrichtung für mindestens ein Paar der Propellerpaare (P-1/P-3 und P-2/P-4), wodurch bewirkt wird, dass ein erstes Paar der Propellerpaare (P-1/P-3) eine Luftbewegung in einer ersten Aufwärtsrichtung bewirkt und ein zweites Paar der Propellerpaare (P-2/P-3) eine Luftbewegung in einer zweiten Abwärtsrichtung bewirkt, wenn sich die Drohnenvorrichtung (100) im Rollmodus (116) befindet, und
dadurch im Rollmodus das kreisförmige Gehäuse rollt und lenkt.

11. Verfahren zum Betreiben einer Drohnenvorrichtung (100) nach Anspruch 10, wobei die Drohnenvorrichtung (100) mindestens vier der Propeller (162) enthält und das Verfahren das wahlweise Umkehren der Luftdurchflussrichtung für mindestens zwei der Propeller (162) umfasst, wenn sich die Drohnenvorrichtung (100) in einem Bodenmodus (114) befindet.

12. Verfahren zum Betreiben einer Drohnenvorrichtung (100) nach Anspruch 10, wobei das Verfahren ferner Folgendes umfasst:
Empfangen einer Anweisung (178) von einer Fernsteuereinheit (99); und
Ändern des Betriebsmodus (110) gemäß der Anweisung (178).

13. Verfahren zum Betreiben einer Drohnenvorrichtung (100) nach Anspruch 10, wobei das Verfahren ferner Folgendes umfasst:
Ändern der Drohnenvorrichtung (100) von einem Flugbetriebsmodus (112) zum Rollbetriebsmodus (116) durch Umkehren des Luftdurchflusses von mindestens einem Propellerpaar der mehreren Propellerpaare (P-1/P-3 und P-2/P-4).

14. Verfahren zum Betreiben einer Drohnenvorrichtung (100) nach Anspruch 10, wobei die Drohnenvorrichtung (100) eine Luftfahrzeuganordnung (160), die die mehreren Propellerpaare (P-1/P-3 und P-2/P-4) enthält, umfasst, wobei die Propeller (162) der Propellerpaare (P-1/P-3 und P-2/P-4) zueinander benachbart sind.

15. Verfahren zum Betreiben einer Drohnenvorrichtung (100) nach Anspruch 10, das ferner das wahlweise Steuern der Drohnenvorrichtung (100) unter Verwendung von Betragsdifferenzen zwischen den Propellern der mehreren Propellerpaare (P-1/P-3 und P-2/P-4) umfasst.

## Revendications

1. Appareil de type drone fermé (100), comprenant :
(a) un ensemble formant une enceinte élastique (120) comprenant une pluralité d'éléments d'enceinte (130) se croisant avec une pluralité d'ouvertures d'enceinte (136) dans celui-ci ; et
(b) un ensemble formant un véhicule aérien (150) solidement positionné à l'intérieur dudit ensemble formant enceinte (120), ledit ensemble formant un véhicule aérien (150) comprenant une pluralité de couples d'hélices (P-1/P-3 et P-2/P-4),
où ledit appareil de type drone (100) est configuré pour fonctionner dans une pluralité de modes (110), ladite pluralité de modes (110) comprenant un mode de vol (112) et un mode sol (114),
où ledit mode sol (114) comprend un mode de roulement (116) où un premier desdits couples d'hélices (P-1/P-3) tourne pour provoquer un mouvement d'air dans une première direction ascendante et un second desdits couples d'hélices (P-2/P-4) tourne pour provoquer un mouvement d'air dans une seconde direction descendante opposée à ladite première direction ascendante,
où, dans ledit mode de vol (112), lesdits plusieurs ensembles d'hélices (P-1/P-3 et P-2/P-4) tournent tous pour provoquer un mouvement d'air dans ladite seconde direction descendante, et
**caractérisé en ce que** des différences d'amplitude dans les débits d'air entre lesdites hélices (162) de ladite pluralité de couples d'hélices dirigent ledit appareil de type drone (100) lorsqu'il est dans ledit mode de roulement (116).

2. Appareil de type drone (100) selon la revendication 1, ledit appareil de type drone comprenant en outre un processeur (176) qui permet de recevoir une instruction (178) d'une télécommande (99).

3. Appareil de type drone (100) selon la revendication 1, dans lequel ledit ensemble formant enceinte (120) est un ensemble formant une enceinte sensiblement sphérique (123).

4. Appareil de type drone (100) selon la revendication 3, dans lequel ladite pluralité d'éléments d'enceinte (130) comprend une pluralité d'éléments d'enceinte horizontaux (134) et une pluralité d'éléments d'enceinte verticaux (132), et où ladite pluralité d'ouvertures d'enceinte (136) sont remplies par une pluralité de surfaces maillées perméables à l'air (138).

5. Appareil de type drone (100) selon la revendication 1, dans lequel ledit ensemble formant véhicule aérien (150) est un véhicule aérien quadrirotor (160).

6. Appareil de type drone (100) selon la revendication 1, dans lequel ladite pluralité d'hélices (162) sont situées dans le même plan horizontal.

7. Appareil de type drone (100) selon la revendication 1, dans lequel ledit ensemble formant véhicule aérien (150) comprend en outre un châssis (170), où lesdits couples d'hélices (P-1/P-3 et P-2/P-4) sont fixés audit châssis (170), et où une pluralité de connecteurs (179) relient ledit châssis (170) audit ensemble formant enceinte élastique (120).

8. Appareil de type drone (100) selon la revendication 1, dans lequel ledit ensemble formant véhicule aérien (150) comprend en outre :
un châssis (170), ledit châssis comprenant une pluralité d'éléments de châssis (174) et une base ;
où lesdits couples d'hélices (P-1/P-3 et P-2/P-4) sont positionnés sur ladite pluralité d'éléments de châssis (174) ; et
où lesdits couples d'hélices (P-1/P-3 et P-2/P-4) sont chacun positionnés vers le haut à partir de ladite pluralité d'éléments de châssis (174) lorsque le drone est dans ledit mode de vol.

9. Appareil de type drone (100) selon la revendication 1, ledit appareil de type drone (100) comprenant en outre un système de mesure inertielle (182), une caméra (185), une antenne (188), et un dispositif GPS (190).

10. Procédé pour faire fonctionner un appareil de type drone (100) dans une pluralité de modes (110) comprenant un mode sol (114), dans lequel ledit appareil de type drone (100) comprend une pluralité de couples d'hélices (P-1/P-3 et P-2/P-4) dans une enceinte sphérique et où ledit mode sol (114) comprend un mode de fonctionnement de roulement (116), ledit procédé étant **caractérisé en ce qu'**il comprend les étapes suivantes :
inverser de manière sélective la direction d'écoulement de l'air pour au moins un couple desdits couples d'hélices (P-1/P-3 et P-2/P-4), amenant un premier desdits couples d'hélices (P-1/P-3) à provoquer un mouvement d'air dans une première direction ascendante et un second desdits couples d'hélices (P-2/P-3) à provoquer un mouvement d'air dans une seconde direction descendante lorsque ledit appareil de type drone (100) est dans ledit mode de roulement (116), et
ainsi, dans ledit mode de roulement, rouler et diriger ladite enceinte sphérique.

11. Procédé pour faire fonctionner un appareil de type drone (100) selon la revendication 10, dans lequel ledit appareil de type drone (100) comprend au moins quatre dites hélices (162), ledit procédé comprenant d'inverser de manière sélective ladite direction d'écoulement d'air pour au moins deux desdites hélices (162) lorsque ledit appareil de type drone (100) est dans un mode sol (114).

12. Procédé pour faire fonctionner un appareil de type drone (100) selon la revendication 10, ledit procédé comprenant en outre les étapes suivantes :
recevoir une instruction (178) d'une télécommande (99) ; et
changer ledit mode de fonctionnement (110) conformément à ladite instruction (178).

13. Procédé pour faire fonctionner un appareil de type drone (100) selon la revendication 10, ledit procédé comprenant en outre l'étape suivante :
faire passer ledit appareil de type drone (100) d'un mode de fonctionnement en vol (112) audit mode de fonctionnement de roulement (116) en inversant la direction d'écoulement de l'air d'au moins un couple d'hélices de ladite pluralité de couples d'hélices (P-1/P-3 et P-2/P-4).

14. Procédé pour faire fonctionner un appareil de type drone (100) selon la revendication 10, dans lequel ledit appareil de type drone (100) comprend un ensemble formant véhicule aérien (160) qui comprend ladite pluralité de couples d'hélices (P-1/P-3 et P-2/P-4), et où les hélices (162) des couples d'hélices (P-1/P-3 et P-2/P-4) sont adjacentes entre elles.

15. Procédé pour faire fonctionner un appareil de type drone (100) selon la revendication 10, comprenant en outre de diriger de manière sélective l'appareil de type drone (100) en utilisant des différences d'amplitude entre lesdites hélices de ladite pluralité de couples d'hélices (P-1/P-3 et P-2/P-4).
